# EUROPÄISCHE PATENTANMELDUNG

(11) **EP 2 799 177 A1**
(43) Veröffentlichungstag der Anmeldung: **05.11.2014**
(21) Anmeldenummer: 13165888.2
(22) Anmeldetag: 30.04.2013
(51) Int. Cl.: B23D 61/04

(54) **Kreissägeblatt mit erhöhter Kontaktfläche zu Schneidelementen**

(71) Anmelder: HILTI Aktiengesellschaft, 9494 Schaan (LI)
(72) Erfinder: Doberenz, Sabine, 89331 Burgau (DE); Spangenberg, Rolf, 82131 Gauting (DE)
(74) Vertreter: Hilti Aktiengesellschaft Corporate Intellectual Property

(57) **Zusammenfassung**

Sägeblatt (1) zum Bearbeiten eines Werkstückes, welches ein Stammblatt (10) mit wenigstens einer Aufnahmefläche (12) zum Halten eines Schneidezahns (20) und wenigstens ein Schneidezahn (20), welcher eine Kontaktfläche (22) zum Anbringen des Schneidezahns (20) an der Aufnahmefläche (12) des Stammblatts (10) aufweist und an dem Kreisumfang (15) des Stammblattes (10) positioniert ist, enthält. Die Berührungsfläche (30) zwischen der Aufnahmefläche (12) des Stammblatts (10) und der Kontaktfläche (22) des Schneidezahns (20) größer als die mittlere Querschnittsfläche (Q) des Schneidezahns (20).

## Beschreibung

Die vorliegende Erfindung betrifft ein Sägeblatt zum Bearbeiten eines Werkstückes. Das Sägeblatt enthält ein Stammblatt mit wenigstens einer Aufnahmefläche zum Halten eines Schneidezahns. Darüber hinaus enthält das Sägeblatt wenigstens ein Schneidezahn, welcher eine Kontaktfläche zum Anbringen des Schneidezahns an der Aufnahmefläche des Stammblatts aufweist und an dem Kreisumfang des Stammblattes positioniert ist.

Sägeblätter der vorstehenden Art sind allgemein bekannt und dienen vorwiegend zum Bearbeiten, d.h. Durchtrennen oder Schneiden, von verschiedenen Werkstoffen beispielsweise aus metallischen, mineralischen Materialien sowie verschiedenen Kunststoffen oder Hölzern.

Ein derartiges Sägeblatt für Kreissägen ist insbesondere in der Europäischen Patentschrift EP-0239676 offenbart. Dieses Sägeblatt weist dabei ein Stammblatt mit einer Vielzahl an Schneidelemente auf, die entlang des Kreisumfangs des Stammblatts befestigt sind.

Nachteilig an diesen Sägeblättern des Stands der Technik ist, dass die Schneidezähne aufgrund hoher mechanischer Belastungen aus ihren Befestigungen am Stammblatt herausbrechen und die Standzeit des Sägeblatts dadurch verkürzt wird. Dies ist speziell bei dünnen Sägeblättern der Fall.

Aufgabe der vorliegenden Erfindung ist daher das Bereitstellen eines Sägeblattes zum Bearbeiten eines Werkstückes, welche die oben genannten Nachteile beseitigt und insbesondere die Standzeit des Sägeblattes erhöht.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängen Ansprüchen beschrieben.

Demnach wird ein Sägeblatt zum Bearbeiten eines Werkstückes bereitgestellt, welches ein Stammblatt mit wenigstens einer Aufnahmefläche zum Halten eines Schneidezahns und wenigstens ein Schneidezahn, welcher eine Kontaktfläche zum Anbringen des Schneidezahns an der Aufnahmefläche des Stammblatts aufweist und an dem Kreisumfang des Stammblattes positioniert ist, enthält.

Erfindungsgemäss ist die Berührungsfläche zwischen der Aufnahmefläche des Stammblatts und der Kontaktfläche des Schneidezahns größer als die mittlere Querschnittsfläche des Schneidezahns.

Gemäss einer vorteilhaften Ausgestaltungsform der vorliegenden Erfindung kann vorgesehen sein, dass die Berührungsfläche in Form einer Stufe ausgebildet ist. Hierdurch ist die Berührungsfläche 54% grösser als die mittlere Querschnittsfläche des Schneidezahns.

Darüber hinaus ist es möglich, dass die Berührungsfläche in Form einer schiefen Ebene ausgebildet ist, wodurch die Berührungsfläche 56% grösser ist als die mittlere Querschnittsfläche des Schneidezahns.

Um eine weitere Erhöhung der Berührungsfläche zwischen der Aufnahmefläche des Stammblatts und der Kontaktfläche des Schneidezahns zu erreichen, kann die Berührungsfläche in Form einer Nut-und-Feder-Anordnung ausgebildet sein.

Entsprechend einer weiteren vorteilhaften Ausgestaltungsform der vorliegenden Erfindung kann die Berührungsfläche in Form einer V-förmigen Vertiefung ausgebildet sein. Hierdurch ist die Berührungsfläche 41 % grösser als die mittlere Querschnittsfläche des Schneidezahns.

Des Weiteren kann es vorteilhaft sein, dass die Berührungsfläche in Form von zwei aus der Mitte der Berührungsfläche wegführenden Bögen ausgebildet ist, wodurch die Berührungsfläche 56% grösser ist als die mittlere Querschnittsfläche des Schneidezahns.

Die vorliegende Erfindung wird bezüglich vorteilhafter Ausführungsbeispiele näher erläutert, hierbei zeigt
- Fig. 1: eine Frontansicht des erfindungsgemässen Sägeblattes mit einer Vielzahl an Zähnen entlang des Kreisumfangs des Stammblattes;
- Fig. 2: eine perspektivische Teilansicht des erfindungsgemässen Sägeblatts mit einem Schneidezahn;
- Fig. 3: eine perspektivische Teilansicht des erfindungsgemässen Sägeblatts mit einer Vielzahl an Schneidezähnen;
- Fig. 4: eine Schnittansicht durch einen Schneidezahn gemäß einer ersten Ausführungsform entlang der Schnittlinie A - A;
- Fig. 5: eine Schnittansicht durch einen Schneidezahn gemäß einer zweiten Ausführungsform entlang der Schnittlinie A - A;
- Fig. 6: eine Schnittansicht durch einen Schneidezahn gemäß einer dritten Ausführungsform entlang der Schnittlinie A - A; und
- Fig. 7: eine Schnittansicht durch einen Schneidezahn gemäß einer vierten Ausführungsform entlang der Schnittlinie A - A.

### AUSFÜHRUNGSBEISPIELE

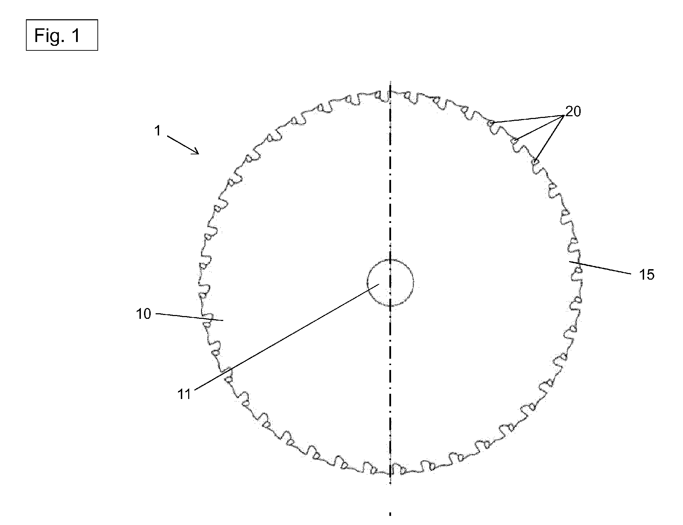

Fig. 1 zeigt ein Sägeblatt 1, welches im Wesentlichen ein kreisförmiges Stammblatt 10 sowie eine Vielzahl an Schneidezähnen 20 enthält.

Das Stammblatt 10 weist dabei ein zentrisches Aufnahmeelement 11 auf, welches in Form einer kreisförmigen Bohrung ausgebildet ist. Das zentrische Aufnahmeelement 11 dient dazu das Stammblatt 10 sowie insbesondere das Sägeblatt 1 an einer nicht gezeigten Haltevorrichtung einer Werkzeugmaschine, wie z.B. einer Kreissäge, zu befestigen. Darüber hinaus enthält das Stammblatt 10 eine Vielzahl an Aufnahmeflächen 14, welche zum Halten jeweils eines Schneidezahns 20 entlang des Kreisumfangs 15 ausgebildet ist. Die Aufnahmeflächen 14 des Stammblatt 10 weisen dabei unterschiedliche Ausführungsformen auf, die nachfolgend im Detail beschrieben werden.

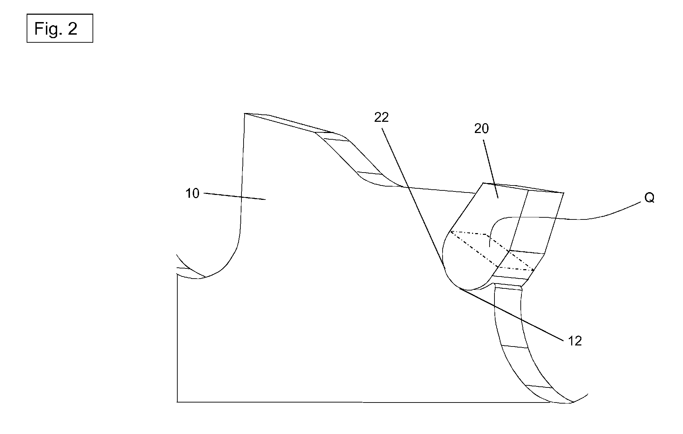

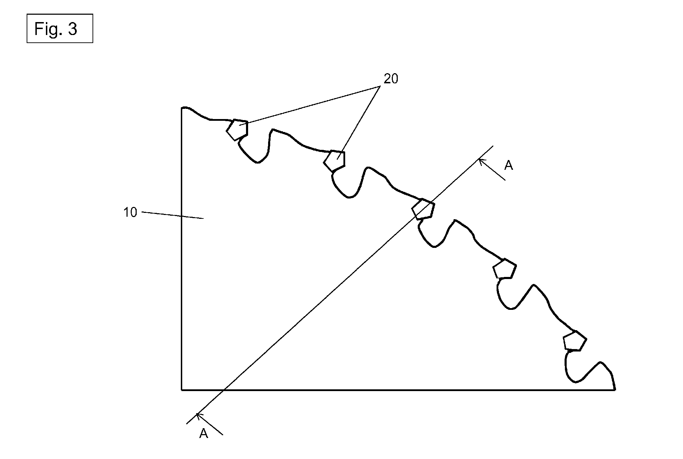

Wie in Fig. 2 und 3 dargestellt, enthält jeder Schneidezahn 20 jeweils eine Kontaktfläche 22 zum Anbringen des Schneidezahns 20 an der Aufnahmefläche 12 des Stammblatts 10. Die Kontaktflächen 22 der Schneidezähne 20 weisen dabei unterschiedliche Ausführungsformen auf, die nachfolgend im Detail beschrieben werden.

Die Aufnahmefläche 12 des Stammblatts 10 sowie die Kontaktfläche 22 eines Schneidezahns 20 bilden eine Berührungsfläche 30 zwischen dem Stammblatt 10 und einem Schneidezahn 20.

Die Anbringung der Schneidezähne 20 erfolgt durch Löten. Es ist jedoch auch möglich, dass jede andere geeignete Fügeverfahren, wie z.B. Kleben, verwendet werden kann.

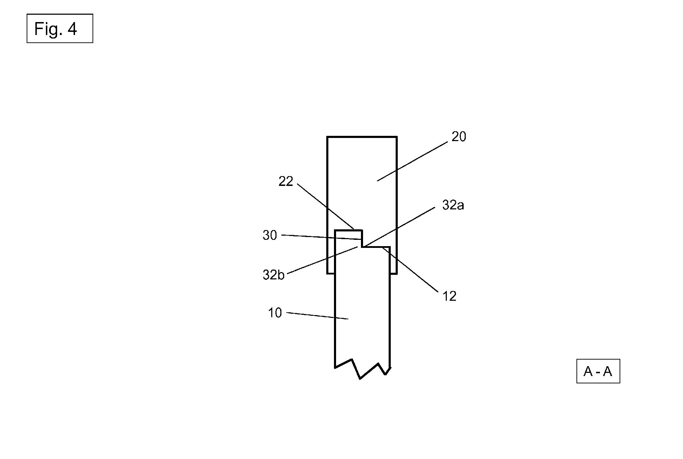

Fig. 4 zeigt eine Schnittansicht einer ersten Ausführungsform der Aufnahmefläche 12 des Stammblatts 10 sowie der Kontaktflächen 22 des Schneidezahns 20 entlang der Schnittlinie A - A aus Fig. 3.

Gemäss dieser ersten Ausführungsform weist sowohl die Aufnahmefläche 12 des Stammblatts 10 als auch die Kontaktfläche 22 des Schneidezahns 20 eine Stufe 32a, 32b auf. Die Stufe 32a der Aufnahmefläche 12 des Stammblatts 10 und die Stufe 32b der Kontaktfläche 22 des Schneidezahns 20 ergänzen sich entsprechend, so dass die Aufnahmefläche 12 des Stammblatts 10 schlüssig auf die Kontaktfläche 22 des Schneidezahns 20 passt. Durch diese Stufen 32a, 32b ist Berührungsfläche 30 zwischen dem Stammblatt 10 und einem Schneidezahn 20 um 54% grösser als die mittlere Querschnittsfläche Q des Schneidezahns 20.

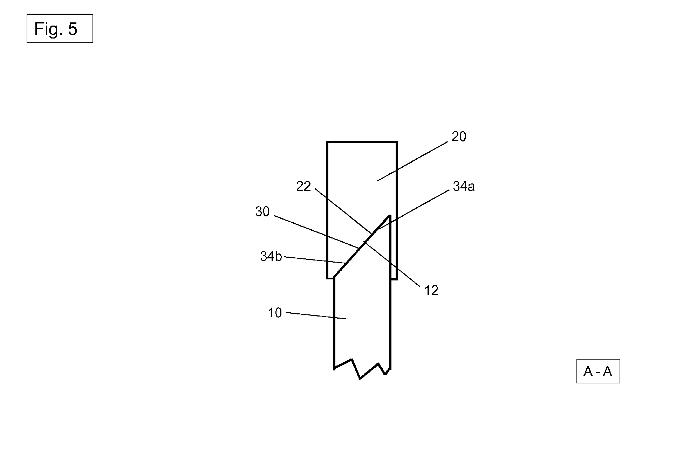

Fig. 5 zeigt eine Schnittansicht einer zweiten Ausführungsform der Aufnahmefläche 12 des Stammblatts 10 sowie der Kontaktfläche 22 des Schneidezahns 20 entlang der Schnittlinie A - A aus Fig. 3.

Gemäss dieser zweiten Ausführungsform weist sowohl die Aufnahmefläche 12 des Stammblatts 10 als auch die Kontaktfläche 22 des Schneidezahns 20 eine schiefe Ebene 34a, 34b auf. Die schiefe Ebene 34a der Aufnahmefläche 12 des Stammblatts 10 und die schiefe Ebene 34b der Kontaktfläche 22 des Schneidezahns 20 ergänzen sich entsprechend, so dass die Aufnahmefläche 12 des Stammblatts 10 schlüssig auf die Kontaktfläche 22 des Schneidezahns 20 passt. Durch diese schiefen Ebenen 34a, 34b ist Berührungsfläche 30 zwischen dem Stammblatt 10 und einem Schneidezahn 20 um 56% grösser als die mittlere Querschnittsfläche Q des Schneidezahns 20.

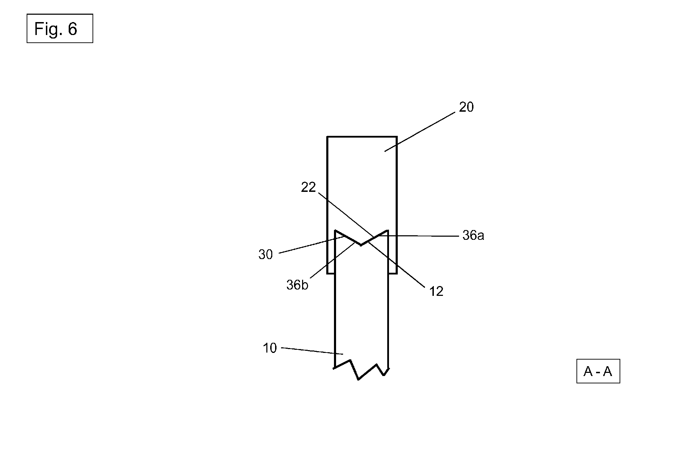

Fig. 6 zeigt eine Schnittansicht einer dritten Ausführungsform der Aufnahmefläche 12 des Stammblatts 10 sowie der Kontaktflächen 22 des Schneidezahns 20 entlang der Schnittlinie A - A aus Fig. 3.

Gemäss dieser dritten Ausführungsform weist sowohl die Aufnahmefläche 12 des Stammblatts 10 als auch die Kontaktfläche 22 des Schneidezahns 20 eine V-förmige Vertiefung 36a, 36b auf. Die V-förmige Vertiefung 36a der Aufnahmefläche 12 des Stammblatts 10 und die V-förmige Vertiefung 36b der Kontaktfläche 22 des Schneidezahns 20 ergänzen sich entsprechend, so dass die Aufnahmefläche 12 des Stammblatts 10 schlüssig auf die Kontaktfläche 22 des Schneidezahns 20 passt. Durch diese V-förmige Vertiefungen 36a, 36b ist Berührungsfläche 30 zwischen dem Stammblatt 10 und einem Schneidezahn 20 um 41% grösser als die mittlere Querschnittsfläche Q des Schneidezahns 20.

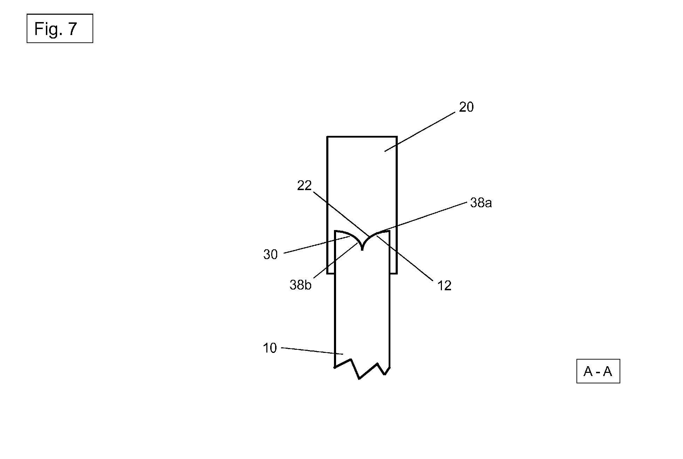

Fig. 7 zeigt eine Schnittansicht einer vierten Ausführungsform der Aufnahmefläche 12 des Stammblatts 10 sowie der Kontaktflächen 22 des Schneidezahns 20 entlang der Schnittlinie A - A aus Fig. 3.

Gemäss dieser vierten Ausführungsform weist sowohl die Aufnahmefläche 12 des Stammblatts 10 als auch die Kontaktfläche 22 des Schneidezahns 20 eine Vertiefung mit zwei aus der Mitte der Berührungsfläche wegführenden Bögen 38a, 38b auf. Diese Vertiefung mit zwei aus der Mitte der Berührungsfläche wegführenden Bögen 38a der Aufnahmefläche 12 des Stammblatts 10 und die Vertiefung mit zwei aus der Mitte der Berührungsfläche wegführenden Bögen 38b der Kontaktfläche 22 des Schneidezahns 20 ergänzen sich entsprechend, so dass die Aufnahmefläche 12 des Stammblatts 10 schlüssig auf die Kontaktfläche 22 des Schneidezahns 20 passt. Durch diese Vertiefungen mit zwei aus der Mitte der Berührungsfläche wegführenden Bögen 38a, 38b ist Berührungsfläche 30 zwischen dem Stammblatt 10 und einem Schneidezahn 20 um 56% grösser als die mittlere Querschnittsfläche Q des Schneidezahns 20.

## Patentansprüche

1. Sägeblatt (1) zum Bearbeiten eines Werkstückes enthaltend
- ein Stammblatt (10) mit wenigstens einer Aufnahmefläche (12) zum Halten eines Schneidezahns (20), und
- wenigstens ein Schneidezahn (20), welcher eine Kontaktfläche (22) zum Anbringen des Schneidezahns (20) an der Aufnahmefläche (12) des Stammblatts (10) aufweist und an dem Kreisumfang (15) des Stammblattes (10) positioniert ist,
**dadurch gekennzeichnet, dass** die Berührungsfläche (30) zwischen der Aufnahmefläche (12) des Stammblatts(10) und der Kontaktfläche (22) des Schneidezahns (20) größer ist als die mittlere Querschnittsfläche (Q) des Schneidezahns (20).

2. Sägeblatt (1) nach Anspruch 1,
**dadurch gekennzeichnet, dass** die Berührungsfläche (30) in Form einer Stufe (32a, 32b) ausgebildet ist.

3. Sägeblatt (1) nach Anspruch 1,
**dadurch gekennzeichnet, dass** die Berührungsfläche (30) in Form einer schiefen Ebene (34a, 34b) ausgebildet ist.

4. Sägeblatt (1) nach Anspruch 1,
**dadurch gekennzeichnet, dass** die Berührungsfläche (30) in Form einer Nut-und-Feder-Anordnung ausgebildet ist.

5. Sägeblatt (1) nach Anspruch 1,
**dadurch gekennzeichnet, dass** die Berührungsfläche (30) in Form einer V-förmigen Vertiefung (36a, 36b) ausgebildet ist.

6. Sägeblatt (1) nach Anspruch 1,
**dadurch gekennzeichnet, dass** die Berührungsfläche (30) in Form von zwei aus der Mitte der Berührungsfläche wegführenden Bögen (38a, 38b) ausgebildet ist.
